Europäisches Patentamt

European Patent Office

Office européen des brevets

(11) Numéro de publication: **0 052 863**
**B1**

(12) **FASCICULE DE BREVET EUROPEEN**

(45) Date de publication du fascicule du brevet: **12.09.84**

(51) Int. Cl.³: **H 04 Q 3/54**

(21) Numéro de dépôt: **81109772.4**

(22) Date de dépôt: **19.11.81**

(54) **Dispositif d'adressage d'un ensemble d'enregistreurs d'un central de commutation.**

(30) Priorité: **26.11.80 FR 8025058**

(43) Date de publication de la demande:
**02.06.82 Bulletin 82/22**

(45) Mention de la délivrance du brevet:
**12.09.84 Bulletin 84/37**

(84) Etats contractants désignés:
**BE CH DE FR GB IT LI NL SE**

(56) Documents cités:
**FR-A-2 359 563**
**US-A-3 737 873**

**COLLOQUE INTERNATIONAL DE COMMUTATION ELECTRONIQUE, 28 mars - 2 avril 1966 PARIS (FR) E. PRAGER: "An experimental electronic system using reed contacts and centralized program control", pages 63 à 72**
**COLLOQUE INTERNATIONAL DE COMMUTATION ELECTRONIQUE, 28 mars - 2 avril 1966 PARIS (FR) G. LE STRAT et al.: "Programmation de l'autocommutateur Artemis", pages 1424 à 1429**

(73) Titulaire: **COMPAGNIE INDUSTRIELLE DES TELECOMMUNICATIONS CIT-ALCATEL S.A. dite:**
**12, rue de la Baume**
**F-75008 Paris (FR)**

(72) Inventeur: **Boulard, Pierre**
**Résidence de Bourgogne 5, rue du Berry**
**F-22300 Lannion (FR)**
Inventeur: **Cozic, Jean-Yves**
**Kerissy Ploulee'h**
**F-22300 Lannion (FR)**
Inventeur: **Fiche, Georges**
**11, rue de Trestrignel**
**F-22700 Perros-Guirec (FR)**

(74) Mandataire: **Weinmiller, Jürgen et al**
**Zeppelinstrasse 63**
**D-8000 München 80 (DE)**

Courier Press, Leamington Spa, England.

# Description

L'invention concerne un dispositif d'adressage d'un ensemble d'enregistreurs d'un central de commutation, les enregistreurs étant utilisés pour la supervision des établissements et des ruptures des communications téléphoniques.

Dans un central de commutation, un enregistreur est une zone mémoire de par exemple 64 mots de 16 éléments binaires (e.b.) chacun; cette zone mémoire contient tous les éléments propres à l'établissement et à la rupture d'une communication; un enregistreur est pris en phase de début d'établissement, ou de début de rupture, et il est libéré en phase de fin d'établissement, ou de fin de rupture.

Un central comprend plusieurs ensembles d'enregistreurs. Dans un ensemble d'enregistreurs, les enregistreurs sont traités cycliquement; ainsi on connait des systèmes dans lesquels on peut traiter un enregistreur pendant 125 microsecondes toutes les 8 millisecondes, ou d'autres systèmes dans lesquels on traite un enregistreur pendant 32 microsecondes toutes les 16 millisecondes.

La caractéristique principale d'un tel traitement réside dans le fait que le temps de traitement de chaque enregistreur est indépendant de la charge du central. Cette caractéristique est un avantage en cas de fort trafic, car elle garantit à chaque enregistreur un traitement régulier; de plus elle facilite les opérations de calibrage de signaux; par contre elle ne permet pas d'optimiser le temps de traitement, par exemple pour chaque établissement ou rupture de communication, car le même temps est alloué aux enregistreurs libres et aux enregistreurs occupés, et parmi ces derniers aux enregistreurs traitant des évènements lents (surveillance de temporisation, surveillance d'un état de boucle, etc...) qu'aux enregistreurs traitant des évènements rapides (par exemple l'analyse d'une numérotation).

L'invention a pour but, tout en conservant un traitement cyclique des enregistreurs, d'optimiser le temps de traitement des enregistreurs traitant des évènements rapides.

L'invention a pour objet un dispositif d'addressage d'un ensemble d'enregistreurs d'un central de commutation, comportant un compteur d'enregistreurs commandé par un signal d'avance pour adresser dans une trame répétitive un nombre N d'enregistreurs, caractérisé par le fait qu'il comporte un premier, un deuxième et un troisième registres en série, le premier registre adressant l'ensemble d'enregistreurs pour lecture d'un enregistreur, le troisième registre adressant l'ensemble d'enregistreurs pour écriture dans un enregistreur, chaque adresse étant présente en sortie du compteur d'enregistreurs et en sortie du premier registre pendant un intervalle de temps de la trame défini par le signal d'avance, chaque adresse étant transférée ensuite dans le deuxième registre où elle est présente pendant un intervalle de temps puis dans le troisième registre où elle est également présente pendant un intervalle de temps,

une mémoire ayant N mots d'au moins un élément binaire, une horloge délivrant un train de N impulsions, un compteur de recherche, un premier multiplexeur ayant une première entrée reliée au compteur de recherche, une deuxième entrée reliée à la sortie du deuxième registre et une sortie reliée à un circuit d'adressage de la mémoire, un deuxième multiplexeur ayant une première entrée reliée au compteur de recherche et une deuxième entrée reliée au compteur d'enregistreurs, que la deuxième entrée du premier multiplexeur est validée par un signal d'écriture appliqué au premier multiplexeur, que la mémoire reçoit en entrée un élément binaire particulier d'une instruction en cours de traitement dans un enregistreur, le signal d'écriture permettant d'écrire dans la mémoire la valeur dudit élément binaire particulier lorsque l'adresse de l'enregistreur en traitement est présente dans le deuxième registre, ledit élément binaire particulier ayant la valeur 1 lorsque l'instruction nécessite un traitement rapide et la valeur 0 dans le cas contraire, et que le signal d'avance est bloqué quand un signal de transfert de durée égale à un intervalle de temps est appliqué au deuxième multiplexeur systématiquement après m intervalles de temps pour valider sa première entrée et transmettre une adresse affichée par le compteur de recherche qui est bloqué dès qu'un élément binaire de valeur 1 est lu dans la mémoire, la recherche d'un élément binaire de valeur 1 étant effectuée dans un temps inférieur à m—1 intervalles de temps, ledit signal de transfert introduisant dans la trame, après chaque m intervalles de temps, un intervalle de temps supplémentaire affecté à un enregistreur dont l'instruction nécessite un traitement rapide.

Le dispositif d'adressage de l'invention permet de traiter cycliquement un nombre N d'enregistreurs contenus dans un ensemble d'enregistreurs; il permet en plus de traiter dans un cycle des enregistreurs que demandent un traitement plus rapide qu'un traitement cyclique, ces enregistreurs faisant bien entendu partie des N enregistreurs.

A cet effet une trame comportera un nombre N d'intervalles de temps affectés chacun de manière fixe à un enregistreur, et un nombre n d'intervalles de temps supplémentaires, de même durée que les intervalles de temps, et régulièrement répartis dans la trame, les intervalles de temps supplémentaires étant affectés, à la demande, aux enregistreurs demandant un traitement rapide qui seront ainsi traités cycliquement et en plus traités lors d'un intervalle de temps supplémentaire, dès qu'un tel intervalle de temps supplémentaire se présente dans la trame immédiatement après détection d'un enregistreur demandant un traitement rapide.

Les enregistreurs sont donc identiques;

lorsqu'un enregistreur traite une instruction, un élément binaire de celle-ci, l'élément binaire 47 par exemple, sert à indiquer si cette instruction nécessite un traitement rapide.

L'élément binaire 47 a la valeur 1 si l'instruction nécessite un traitement rapide; il a la valeur 0 dans le cas contraire. Lors du traitement d'un enregistreur, l'élément binaire 47 de l'instruction est lu et mémorisé dans une mémoire; cette mémoire est lue entre deux intervalles de temps supplémentaires afin de rechercher si un enregistreur réclame un traitement rapide. Une tâche donnée, à exécuter en M instructions, peut comporter par exemple R instructions à traiter en "rapide" et L instructions à traiter en "lent" c'est-à-dire au rythme du cycle de traitement des enregistreurs; on a donc M=R+L.

Pour avoir un maximum de profit dans le traitement des enregistreurs selon le dispositif d'adressage de l'invention, il est important d'optimiser le rapport R/L, donc de choisir judicieusement les instructions à traiter en "rapide" et celles à traiter en "lent".

Pour un ensemble d'enregistreurs comportant par exemple N=256 enregistreurs, une trame comportera un nombre N d'intervalles de temps et, par exemple, un nombre n=64 d'intervalles de temps supplémentaires, de même durée que les intervalles de temps. Une trame de durée de 10 millisecondes par exemple sera divisée en 320 intervalles de temps identiques de 31,25 microsecondes; il y a, dans cet exemple, un intervalle de temps supplémentaire après quatre intervalles de temps affectés à des enregistreurs. Les calculs montrent que pour un taux moyen d'occupation des intervalles de temps supplémentaires de 0,8 le gain moyen en temps réel de traitement est égal à 12, par rapport à un multienregistreur traité régulièrement toutes les huit millisecondes, comme cela est le cas dans un des traitements connus. Pour obtenir ce gain le rapport R/L doit rester inférieur à 0,15; au dela de cette valeur le nombre d'enregistreurs demandant à être traités en "rapide" augmente très vite, et le gain chute.

Avant de décrire, un exemple de réalisation d'un dispositif d'adressage de l'invention on va rappeler brièvement ce qu'est une bi-programmation.

La programmation a été exposée dans le brevet français n° 2 359563 intitulé "Central de télécommunications temporel". Le temps de traitement d'un enregistreur, qui est de 31,25 microsecondes, est divisé en 32 temps élémentaires repérés $\mu 0$, $\mu 1$,...$\mu 31$. Pour chaque enregistreur 3 types de traitement sont possibles: PROLENT, SIMPRO et BIPRO.

PROLENT: Programme lent.

Une seule instruction est traitée de $\mu 0$ à $\mu 15$. Le fonctionnement du bloc de calcul est inhibé de $\mu 16$ à $\mu 31$. L'adresse de l'instruction à traiter est dans le premier mot de l'enregistreur (mot 0). Ce mode de fonctionnement est peu utilisé.

SIMPRO: Simple programme.

Deux instructions successives du même programme sont exécutées, l'une de $\mu 0$ à $\mu 15$, l'autre de $\mu 16$ à $\mu 31$. L'adresse de l'instruction à exécuter se trouve toujours dans le mot 0 de l'enregistreur.

BIPRO: bi-programme.

Deux programmes parallèles s'exécutent de façon synchrone; par exemple l'un reçoit la numérotation en provenance d'un abonné demandeur pendant que l'autre programme réémet cette numérotation vers un autre central.

1er programme:  l'instruction est exécutée de $\mu 0$ à $\mu 15$, l'adresse de l'instruction étant dans le mot 0 de l'enregistreur

2ème programme:  l'instruction est exécutée de $\mu 16$ à $\mu 31$, l'adresse de l'instruction étant dans le mot 32 de l'enregistreur.

C'est pendant le déroulement de la première instruction, lors du traitement de l'enregistreur présent dans la mémoire tampon en traitement, que le type de traitement à appliquer pendant les temps élémentaires $\mu 16$ à $\mu 31$ est déterminé, à partir de l'état des éléments binaires (e.b.) 45 et 46 de l'instruction, selon le codage suivant:

|  | e.b. 45 | e.b. 46 |
|---|---|---|
| PROLENT | 1 | 0 ou 1 |
| SIMPRO | 0 | 1 |
| BIPRO | 0 | 0 |

Lors de certains traitement effectués en mode BIPRO, il peut être souhaitable de dérouler un programme en "rapide" et l'autre en "lent". Par exemple, un programme rapide exécute des opérations de traduction sur les premiers chiffres reçus du demandeur pendant que le deuxième programme continue, en "lent" c'est-à-dire en traitement cyclique, la réception des autres chiffres; ce deuxième programme doit nécessairement travailler en "lent" car il doit opérer des calibrages d'impulsions par référence à son cycle de traitement qui est de 10 millisecondes. De ce fait le mémoire du dispositif d'adressage de l'invention comporte 2 e.b. par numéro d'enregistreur;
l'un est inscrit à partir de l'e.b. 47 de la première instruction et l'autre à partir de l'e.b. 47 de la deuxième instruction.

Lorsque le programme se déroule en SIMPRO, les 2 e.b. de la mémoire sont écrits systématiquement à 1 si l'une des deux instructions comporte un e.b. 47 de valeur 1; lorsque le programme se déroule en PROLENT les 2 e.b.

de la mémoire ont systématiquement même valeur.

En lecture de la mémoire, lors d'un traitement pendant un intervalle de temps supplémentaire de la trame les 2 e.b. sont testés: l'un valide le fonctionnement du bloc de calcul en phase de traitement pendant les temps élémentaires $\mu0$ à $\mu15$, l'autre pendant les temps élémentaires $\mu16$ à $\mu31$.

L'invention sera bien comprise par la description qui va suivre d'un exemple de réalisation illustré par les figures annexées dans lesquelles:

— la figure 1 représente un dispositif de traitement d'enregistreurs associé à un dispositif d'adressage de l'invention,
— la figure 2 représente le dispositif d'adressage de la figure 1,
— la figure 3 est un chronogramme des signaux utilisés dans le dispositif d'adressage de la figure 2.

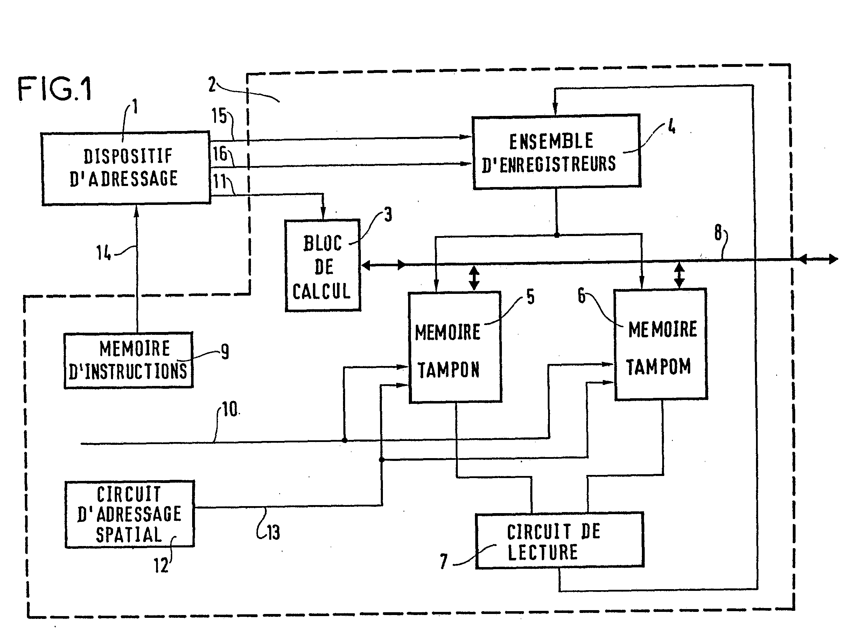

La figure 1 représente schématiquement un dispositif d'adressage 1, de l'invention associé à un dispositif de traitement d'enregistreurs 2.

Le dispositif de traitement d'enregistreurs 2, qui ne fait pas partie de l'invention, est de type connu, et par exemple du type décrit dans le brevet français n° 23 59 563 intitulé "central de télécommunication temporel". Le dispositif de traitement d'enregistreurs 2, représenté schématiquement, comprend: un circuit de calcul 3, un ensemble d'enregistreurs 4, qui est essentiellement un bloc mémoire comportant par exemple 256 zones mémoire de 64 mots chacune, chaque zone mémoire correspondant à un enregistreur, deux mémoires tampon 5 et 6, et un circuit de lecture 7. Le dispositif d'addresage 1 est relié à l'ensemble d'enregistreurs 4 par une ligne de lecture 16 et une ligne d'écriture 15.

Chaque mémoire tampon est reliée à la sortie de l'ensemble d'enregistreurs 4 et à un bus d'information 8, bidirectionnel, auquel est également relié une mémoire de micro-instructions non représentée. Chaque mémoire tampon est reliée d'une part à une ligne de commande d'adressage 10, et d'autre part à un circuit d'adressage spatial 12 par une ligne 13.

Le circuit de calcul 3 est également relié aux mémoires tampon 5 et 6 par le bus d'information 8; le circuit de calcul est relié par un fil de blocage 11 au dispositif d'adressage 1.

Une mémoire d'instructions 9 est reliée en sortie par un fil de marquage 14 au dispositif d'adressage 1.

Dans le dispositif de traitement d'enregistreurs 2, les mémoires tampon 5 et 6 sont alternativement l'une en lecture/écriture et l'autre en traitement; ceci est obtenu par un signal d'adressage appliqué sur la ligne de commande d'adressage 10, signal de période 62,5 microsecondes ayant pendant 31,25 microsecondes la valeur 1 et pendant 31,25 microsecondes la valeur 0.

Lorsqu'une mémoire tampon est en lecture/écriture on dit qu'elle est en adressage temporel, et lorsqu'elle est en traitement on dit qu'elle est en adressage spatial; c'est le signal d'adressage qui commande le passage d'un adressage temporel à un adressage spatial et réciproquement.

L'adressage spatial des mémoires tampon 5 et 6 est effectué par le circuit d'adressage spatial 12 relié par la ligne 13 aux mémoires tampon 5 et 6.

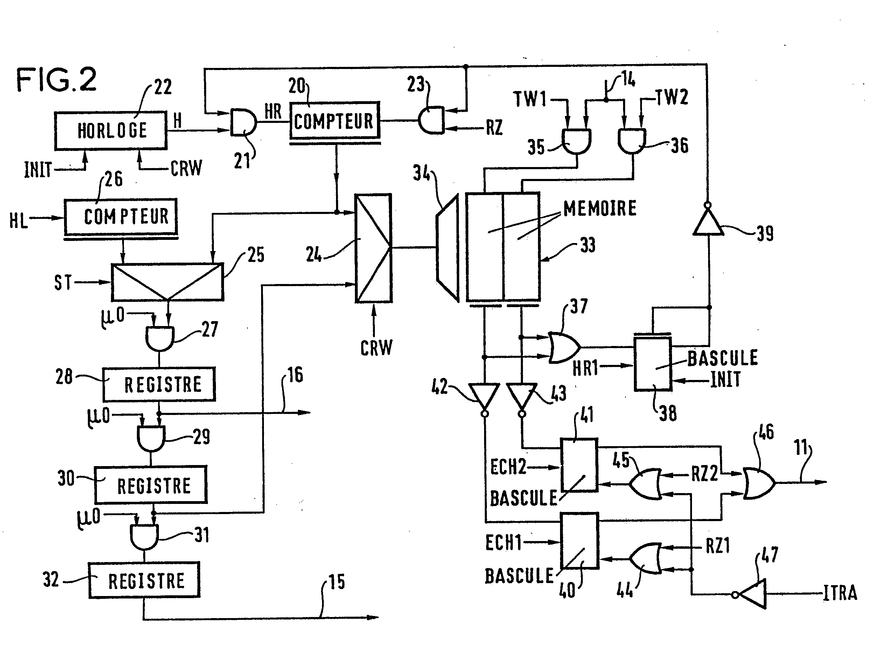

La figure 2 représente le dispositif d'adressage de la figure 1. Un compteur de recherche 20 reçoit d'une porte ET 21 un signal de recherche HR; une entrée de la porte ET 21 est reliée à la sortie d'une horloge 22 délivrant un signal d'horloge H; l'horloge 22 reçoit un signal d'initialisation INIT et un signal d'écriture CRW définis plus loin. Elle démarre sous commande du signal d'initialisation INIT et est bloquée pendant le temps correspondant à chaque signal d'écriture CRW. Le signal d'horloge H est composé de trains d'impulsions, chaque train comportant en tout 256 impulsions qui sont délivrées dans un temps inférieur à trois intervalles de temps d'une trame, donc inférieur à 93,75 microsecondes. La sortie du compteur de recherche 20 est reliée d'une part à une entrée d'un premier multiplexeur 24 et d'autre part à une entrée d'un deuxième multiplexeur 25. Un compteur d'enregistreurs 26 reçoit en entrée un signal d'avance HL, toutes les 31,25 microsecondes et sa sortie est reliée à une autre entrée du deuxième multiplexeur 25; la sortie du deuxième multiplexeur est reliée à une entrée d'une porte ET 27 recevant sur une autre entrée le signal de temps élémentaire $\mu0$ qui est le premier signal de traitement d'un enregistreur comme cela a été dit plus haut. La sortie de la porte ET 27 est reliée à un premier registre 28 dont la sortie est reliée d'une part à l'ensemble d'enregistreurs 4, de la figure 1, par le fil de lecture 16, et d'autre part à une entrée d'une porte ET 29 recevant sur une autre entrée le signal de temps élémentaire $\mu0$. La sortie de la porte ET 29 est reliée à un deuxième registre 30 dont la sortie est reliée d'une part à une autre entrée du premier multiplexeur 24 et d'autre part à une entrée d'une porte ET 31 recevant sur une autre entrée le signal de temps élémentaire $\mu0$. La sortie de la porte ET 31 est reliée à un troisième registre 32 dont la sortie est reliée à l'ensemble d'enregistreurs 4, figure 1 par le fil d'écriture 15.

Le premier multiplexeur 24 est commandé par le signal d'écriture CRW qui, lorsqu'il a la valeur 1, aiguille vers sa sortie l'adresse délivrée par le deuxième registre 30, et qui, lorsqu'il à la valeur 0, aiguille vers sa sortie les adresses délivrées par le compteur de recherche 20.

Le deuxième multiplexeur 25 est commandé par un signal de transfert ST qui, lorsqu'il a la valeur 1, pendant 31,25 microsecondes, aiguille vers sa sortie l'adresse présente en sortie du compteur de recherche 20, et qui lorsqu'il à la valeur 0, pendant quatre intervalles de temps

soit 4×31,25=125 microsecondes, aiguille vers sa sortie les adresses délivrées par le compteur d'enregistreurs 26.

Une mémoire 33, d'une capacité de 256 mots de 2 e.b., reçoit des informations concernant les enregistreurs qui demandent un traitement rapide; ces informations sont acheminées, depuis la mémoire d'instructions 9, figure 1, par le fil de marquage 14; un circuit d'adressage 34 de la mémoire est relié à la sortie du premier multiplexeur 24. Deux portes ET 35 et 36 ont chacune une entrée reliée au fil de marquage 14; la porte ET 35 reçoit sur une autre entrée en premier signal de marquage TW1: la porte ET 36 reçoit sur une autre entrée un deuxième signal de marquage TW2; chacune des portes ET 35, 36 permet l'écriture d'un e.b. dans un mot de la mémoire 33. En sortie de la mémoire 33 chaque e.b. est appliqué à une entrée d'une porte OU 37 dont la sortie est reliée à une bascule à automaintien 38 commandée par un signal d'horloge HR1 qui est le signal de recherche HR retardé pour prendre en compte l'état stabilisé de la mémoire 33 après progression du compteur de recherche 20; la bascule 38 est remise à zéro par le signal d'initialisation INIT.

La sortie de la bascule 38 est reliée à travers un inverseur 39 à une autre entrée de la porte ET 21 et à une entrée d'une porte ET 23 recevant un signal de remise à zéro RZ; la sortie de la porte ET 23 est reliée à une entrée de remise à zéro du compteur de recherche 20.

La sortie de la mémoire 33 correspondant aux éléments binaires écrits sous commande du premier signal de marquage TW1 est reliée à travers un inverseur 42 à une bascule 40 commandée par un premier signal d'échantillonnage ECH1; la sortie de la mémoire 33 correspondant aux éléments binaires écrits sous commande du deuxième signal de marquage TW2 est reliée à travers un inverseur 43 à une bascule 41 commandée par un deuxième signal d'échantillonnage ECH2. La sortie de la bascule 40 est reliée à une entrée d'une porte OU 46 et la sortie de la bascule 41 est reliée à une autre entrée de la porte OU 46. La sortie de la porte OU 46 est reliée au bloc de calcul 3, figure 1, par le fil de blocage 11. L'entrée de remise à zéro de la bascule 40 est reliée à la sortie d'une porte OU 44 et l'entrée de remise à zéro de la bascule 41 est reliée à la sortie d'une porte OU 45; une entrée de chaque porte OU 44 et 45 est reliée à la sortie d'un inverseur 47 qui reçoit en entrée un signal intervalles rapides ITRA, en phase avec un intervalle de temps supplémentaire de la trame, et de même durée que lui; une autre entrée de la porte OU 44 reçoit un signal de remise à zéro RZ1, et une autre entrée de la porte OU 45 reçoit un signal de remise à zéro RZ2.

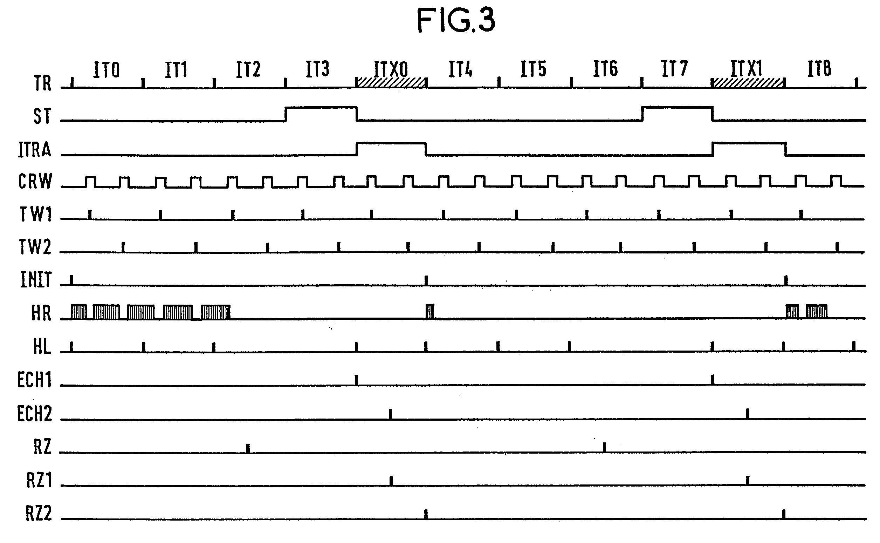

La figure 3 est un chronogramme des signaux utilisés dans le dispositif d'adressage. La trame TR correspond aux adresses délivrées par le deuxième registre 30. Pour l'explication du fonctionnement du dispositif d'adressage on supposera que l'ensemble d'enregistreurs 4, figure 1, comporte 256 enregistreurs et que chaque enregistreur est lu pendant 31,25 microsecondes; comme les enregistreurs sont écrits et traités alternativement dans les mémoires tampon 5 et 6, chaque enregistreur est traité pendant 31,25 microsecondes, et l'on se souviendra qu'un enregistreur en cours de traitement a été transféré de l'ensemble d'enregistreurs 4 dans une mémoire tampon 31,25 microsecondes avant; en effet le transfert a lieu quand l'adresse de l'enregistreur est présente en sortie du premier registre 28, et le traitement lorsque cette même adresse est présente en sortie du deuxième registre 30.

Le compteur d'enregistreurs 26, qui avance au rythme du signal d'avance HL, délivre les adresses successives des enregistreurs; sur la figure 3 on a repéré par IT0, IT1, IT2, IT3,...les intervalles de temps de la trame TR attribués aux enregistreurs E0, E1, E2, E3,..., et par ITX0, ITX1,...les intervalles de temps supplémentaires; cette trame TR correspond aux adresses 0, 1, 2, 3, X0, 4, 5, 6, 7, X1, 8,..., présentées en sortie du deuxième registre 30. Les adresses 0, 1, 2, 3, 4...délivrées par le compteur d'enregistreurs 26 se retrouvent en sortie du deuxième multiplexeur 25 tant que le signal de transfert ST a la valeur 0; ce signal de 31,25 microsecondes a la valeur 1 après quatre adresses délivrées par le compteur d'enregistreur; sur la figure 2 ce signal a donc la valeur 1 pendant l'intervalle de temps qui précédé chaque intervalle de temps supplémentaire ITX0, ITX1,...Le signal d'initialisation INIT est une impulsion délivrée à la fin de chaque intervalle de temps supplémentaire. Le signal de remise à zéro RZ, appliqué au compteur de recherche 20 par l'intermédiaire de la porte ET 23, est une impulsion délivrée après un temps correspondant au temps nécessaire à l'horloge 22 pour délivrer 256 impulsions; ce signal de remise à zéro doit également être délivré avant le début du quatrième intervalle de temps de la trame TR. Ce signal RZ est appliqué au compteur de recherche 20 en fin de recherche, uniquement si cette recherche est négative. On remarquera, sur la figure 3, que le signal d'avance HL est bloqué lorsque le signal de transfert apparaît; le compteur d'enregistreurs 26 doit en effet être arrêté quand c'est l'adresse du compteur de recherche 20 qui est prise en compte par le deuxième multiplexeur 25.

L'enregistreur E0 est réservé au contrôle du bon fonctionnement du central, et son contenu est toujours nul après traitement car il exécute toujours la même instruction qui se termine toujours par son effacement; l'enregistreur E0 est donc toujours traité cycliquement, mais il peut être adressé dans un intervalle de temps supplémentaires si aucun des autres enregistreurs ne demande un traitement rapide; dans ce cas il n'est effectué aucun traitement sur l'enregis-

treur E0, comme cela sera expliqué lors du fonctionnement. L'e.b. 47 de l'instruction a donc toujours la valeur 0 puisque cet enregistreur ne demande jamais un traitement rapide.

Le fonctionnement du dispositif d'adressage est le suivant, en supposant, comme indiqué figure 3, que l'on est à l'instant du début d'une trame TR, dont les adresses successives des enregistreurs sont délivrées par le deuxième registre 30:

Le compteur d'enregistreurs 26 délivre l'adresse 1 de l'enregistreur E1, le signal d'initialisation INIT remet la bascule 38 à zéro et l'inverseur 39 délivre un signal de valeur 1 à la porte ET 21; en même temps l'horloge 22 démarre et le signal d'horloge H est appliqué, par la porte ET 21, au compteur de recherche 20 qui reprend son comptage à partir de la valeur où il était arrêté; les adresses qu'il délivre sont appliquées à travers le premier multiplexeur 24 au circuit d'adressage 34 de la mémoire 33, ce qui en provoque la lecture; tant que les deux e.b. de chaque mot de la mémoire ont la valeur 0 le signal en sortie de la porte OU 37 est nul, la bascule 38 a toujours la valeur 0 en sortie et le signal en sortie de l'inverseur 39 à la valeur 1. L'adresse 1 délivrée par le compteur d'enregistreurs 26, est appliquée, par l'intermédiaire du deuxième multiplexeur 25 au premier registre 28, adresse qui se retrouve sur la ligne de lecture 16, ce qui commande le transfert du contenu de l'enregistreur E1 de l'ensemble d'enregistreurs 4 dans une mémoire tampon, 5 par exemple, si celle-ci est validée à l'écriture par le signal présent sur la ligne de commande d'adressage 10. Lorsque le compteur d'enregistreurs 26 délivre l'adresse 1, celle-ci est transférée dans le premier registre 28, et l'adresse 0 est transférée du premier registre 28 dans le deuxième registre 30 dont la sortie est reliée au premier multiplexeur 24. Toujours à cet instant correspondant au signal d'initialisation INIT, le contenu de l'enregistreur E0 est dans la mémoire tampon 6, et le signal sur la ligne de commande 10 autorise le traitement de l'enregistreur E0. Lorsque la mémoire tampon 6 est en phase de traitement, le mot 0 de l'enregistreur E0 est lu au temps élémentaire $\mu 0$, et ce mot contient l'adresse de l'instruction à lire dans la mémoire d'instructions 9; à la lecture, l'e.b. 47 de cette instruction qui à la valeur 0 est appliqué, par le fil de marquage 14 aux portes ET 35 et 36 et inscrit dans les deux e.b. de la mémoire aux temps d'apparition des signaux TW1 et TW2 correspondant au signal d'écriture CRW qui valide le premier multiplexeur 24 autorisant ainsi l'adressage de la mémoire 33 par l'adresse 0, correspondant à l'enregistreur E0, délivrée par le deuxième registre 30.

D'une manière générale, pendant l'intervalle de temps correspondant au traitement d'un enregistreur dont l'adresse est présente en sortie du deuxième registre 30, il y a deux impulsions du signal d'écriture CRW; la première correspond à l'instruction adressée au temps élémentaire $\mu 0$ et la seconde à l'instruction adressée au temps élémentaire $\mu 16$. Dans le cas d'un simple programme, SIMPRO, comme il s'agit nécessairement de deux instructions du même programme, on écrit les 2 cases de la mémoire à la même valeur selon la valeur de l'eb 47 de la 2e instruction. Dans le cas d'un programme lent, PROLENT, il n'y a pas d'instruction lue au temps élémentaire $\mu 16$ et par conséquent l'e.b. de la mémoire 33 correspondant à la porte ET 36 a la valeur 0, pour l'enregistreur considéré. Dans le cas d'un biprogramme, BIPRO, chaque e.b. 47 des deux instructions adressées par l'enregistreur en traitement a une valeur 0 ou 1, mais ces valeurs ne sont pas liées entre elles.

Les impulsions du signal d'écriture CRW inhibent le fonctionnement de l'horloge 22 pendant leur durée, et autorisent l'adressage de la mémoire 33 par l'adresse présente en sortie du deuxième registre 30, à travers le premier multiplexeur 24. La mémoire 33 étant adressée, la porte ET 35 est validée par le premier signal de marquage TW1 et la porte ET 36 est validée par le second signal de marquage TW2. Le premier signal de marquage TW1 permet d'inscrire dans la mémoire 33 l'e.b. 47 correspondant à l'instruction adressée au temps élémentaire $\mu 0$; le deuxième signal de marquage TW2 permet d'inscrire dans la mémoire 33 l'e.b. 47 correspondant à l'instruction adressée au temps élémentaire $\mu 16$.

Lorsque le compteur d'enregistreurs 26 délivre l'adresse 2 celle-ci est inscrite dans le premier registre 28, l'adresse 1 est transférée du premier registre 28 dans le deuxième registre 30, et l'adresse 0 est transférée du deuxième registre dans le troisième registre 32; l'adresse 0 est donc présente sur la ligne d'écriture 15. Lorsqu'une mémoire tampon est en écriture, elle est également en lecture pour inscrire son contenu dans l'ensemble d'enregistreurs 4 à l'adresse correspondant à l'enregistreur qui a été traité dans ladite mémoire tampon.

Il y a donc, dans le cas présent, lecture dans l'ensemble d'enregistreurs 4 du contenu de l'enregistreur E2 dont l'adresse 2 est présente sur la ligne de lecture 16, contenu qui est inscrit dans la mémoire tampon 6, et écriture dans l'ensemble d'enregistreurs 4, à l'emplacement réservé à l'enregistreur E0, du contenu de la mémoire tampon 6, l'ensemble d'enregistreurs 4 étant adressé à l'écriture par l'adresse 0 présente sur la ligne d'écriture 15, c'est-à-dire l'adresse de l'enregistreur E0.

Puis le compteur d'enregistreur 26 délivre l'adresse 3 qui est transférée dans le premier registre 28; l'adresse 2 est transféré du premier registre dans le deuxième registre 30, et l'adresse 1 est transférée dans le troisième registre 32. Le contenu de l'enregistreur E3 est transféré dans la mémoire tampon 5, en même temps que la mémoire tampon 5 est lue pour inscrire son contenu dans l'enregistreur E1; l'enregistreur E2 dont le contenu est présent dans la mémoire tampon 6 est en phase de traitement.

Comme il n'y a pas de signal d'avance HL appliqué au compteur d'enregistreurs 26, 31,25 microsecondes après que celui-ci a affiché l'adresse 3, il est bloqué, mais le signal de transfert ST étant appliqué aux deuxième multiplexeur 25, c'est l'adresse délivrée par le compteur de recherche qui est transférée dans le premier registre 28. Sur la figure 3, signal HR, on a supposé que le compteur de recherche comptait 256 impulsions, aucun enregistreur ne demandant un traitement rapide; on supposera également que l'enregistreur correspondant à l'adresse délivrée par le compteur de recherche 20, qui est arrêté lorsque le signal de transfert ST est présent puisque l'horloge 22 ne délivre que 256 signaux d'horloge, ne demande pas de traitement rapide. Par conséquent les 2 e.b. en sortie de la mémoire 33 ont la valeur 0; le signal en sortie de l'inverseur 39 a la valeur 1, et lorsque le signal de remise à zéro RZ est appliqué à la porte ET 23, le compteur de recherche 20 est remis à zéro et délivre l'adresse 0 qui correspond à l'enregistreur E0. C'est donc l'adresse 0 qui est transférée dans le premier registre 28 lorsque le signal de transfert ST est appliqué au deuxième multiplexeur 25; l'adresse 3 est transférée du premier registre dans le deuxième registre 30 et l'adresse 2 est transférée du deuxième registre dans le troisième registre 32. Le contenu de l'enregistreur E0 est transféré dans la mémoire tampon 6 qui est également lue pour inscrire son contenu dans l'enregistreur E2; l'enregistreur E3 dont le contenu est présent dans la mémoire tampon 5 est en phase de traitement.

Ensuite le compteur d'enregistreurs 26 reprend son comptage; lorsqu'il délivre l'adresse 4, l'adresse 0 correspondant à l'enregistreur E0 est délivrée par le deuxième registre 30; l'enregistreur E0 dont le contenu est présent dans la mémoire tampon 6 est en phase de traitement pendant l'intervalle de temps supplémentaire ITX0 de la trame TR. Les deux e.b. de la mémoire 33 ont la valeur 0 et, après les inverseurs 42, 43, sont pris en compte, dans les bascules 40 et 41, respectivement, par les premier et deuxième signaux d'échantillonnage ECH1 et ECH2 au cours de l'intervalle de temps supplémentaire ITX0; ces bascules étaient remises en permanence à zéro puisque l'inverseur 47 délivre un signal de valeur 1, le signal ITRA avant lui-même la valeur 0, sauf pendant le temps correspondant à un intervalle de temps supplémentaire. La porte OU 46 recevant un signal de valeur 1 de la bascule 40 puis de la bascule 41 délivre un signal de valeur 1 sur le fil de blocage 11, inhibant ainsi le bloc de calcul 3, figure 1, ce qui interdit le traitement de l'enregistreur E0 comme cela a été dit.

Lorsque le compteur d'enregistreurs 26 délivre l'adresse 5, le signal d'initialisation INIT provoque le fonctionnement de l'horloge 22 et le compteur de recherche 20 compte, à partir de zéro. On a supposé, sur la figure 3, signal HR, que le compteur de recherche était arrêté en cours de comptage, suite à la détection d'un enregistreur demandant un traitement rapide, par exemple, l'enregistreur E2. L'arrêt du compteur de recherche 20 est obtenu comme suit: lorsque la mémoire 33 est adressée par le compteur de recherche 20, les deux e.b. de chaque mot sont lus et appliqués à la porte OU 37; dès qu'un e.b. a la valeur 1 la sortie de bascule 38 passe à 1 et le signal délivré par l'inverseur 39 prend à la valeur 0 ce qui inhibe la porte ET 21 et arrête le comptage; le compteur de recherche est donc arrêté à la valeur 2 qui est l'adresse de l'enregistreur E2. Le signal de remise à zéro RZ est inopérant puisque le signal délivré par l'inverseur 39 a la valeur 0; il n'y a donc pas de remise à zéro du compteur de recherche 20. L'adresse 2 est appliquée au premier registre 28, via la deuxième multiplexeur 25, sous commande du signal ST; lorsque le compteur d'enregistreurs 26 délivre l'adresse 8, l'adresse 2 est transférée dans le deuxième registre 30, et le contenu de l'enregistreur E2 est en phase de traitement pendant l'intervalle de temps supplémentaire ITX1; lorsque le deuxième registre 30 a reçu l'adresse 2 celle-ci est présente à l'entrée du premier multiplexeur 24 reliée à la sortie du deuxième registre; cette adresse est envoyée au circuit d'adressage 34 pendant les créneaux de temps du signal d'écriture CRW, ce qui permet l'écriture dans la mémoire 33 des deux e.b. 47 des instructions adressées par l'enregistreur E2 en cours de traitement. Par ailleurs, au début de l'intervalle de temps supplémentaire ITX1, la valeur de l'élément binaire (e.b.) de la mémoire 33 correspondant à la porte ET 35 est pris en compte via l'inverseur 42 par la bascule 40 sous commande du premier signal d'échantillonnage ECH1, avant l'écriture dans la mémoire de la nouvelle valeur; de même la valeur de l'e.b. de la mémoire 33 correspondant à la porte ET 36 est pris en compte via l'inverseur 43 par la bascule 41 sous commande du deuxième signal d'échantillonnage ECH2, avant l'écriture dans la mémoire de la nouvelle valeur.

Si l'e.b. délivré par la mémoire 33 correspondant à la porte 35 est à "1", le bloc de calcul n'est pas inhibé pendant l'intervalle de temps compris entre $\mu 0$ et $\mu 15$. Si l'e.b. délivré par la mémoire 33 correspondant à la porte 36 est à "1", le bloc de calcul n'est pas inhibé pendant l'intervalle de temps compris entre $\mu 16$ et $\mu 31$. On voit donc que le bloc de calcul 3 peut être validé pour le traitement d'une instruction et inhibé pour le traitement d'une autre instruction, si le traitement est du type bi-programme BIPRO, par exemple.

Lors du traitement cyclique des enregistreurs les bascules 40 et 41 ne prennent pas en compte les e.b. délivrés par la mémoire 33, tant lors de la phase de recherche d'un enregistreur demandant un traitement rapide que lorsque le compteur de recherche 20 est arrêté après avoir trouvé un enregistreur demandant un traitement rapide; en effet, les premier et deuxième signaux d'échantillonnage ECH1 et ECH2 ne permettent de tenir compte de la valeur des e.b. en sortie de la mémoire 33 que lors du traitement d'un enregistreur pendant un intervalle de temps supplémentaire, ITX0, ITX1, ITX2...; les bascules 40 et 41 sont maintenues en permanence à zéro par le signal intervalle de temps supplémentaire ITRA. On remarquera également que pendant un intervalle de temps supplémentaire de la trame, chaque bascule est remise à zéro par un signal de remise à zéro, RZ1, ou RZ2. Ainsi la bascule 40, si sa sortie avait la valeur 1, est remise à zéro, alors que la bascule 41 reçoit le deuxième signal d'échantillonnage ECH2, ceci afin de permettre au signal sur le fil de blocage 11 d'avoir la valeur requise pour valider ou non le bloc de calcul en fonction de la valeur de chaque e.b. délivré par la mémoire 33; le deuxième signal de remise à zéro RZ2 intervient à la fin de l'intervalle de temps supplémentaire.

Dans la description ci-dessus d'un exemple de réalisation d'un dispositif d'adressage, on a supposé que la trame TR comportait un intervalle de temps supplémentaire ITX0, ITX1..., après quatre intervalles de temps; bien entendu d'une manière générale il est possible d'introduire un intervalle de temps supplémentaire après m intervalles de temps; cela s'obtient aisément en modifiant la fréquence du signal de transfert car l'introduction des intervalles de temps supplémentaires dans une trame est faite lorsque le signal de transfert ST est appliqué aux deuxième multiplexeur 25, afin de transmettre l'adresse présente en sortie du compteur de recherches 20, qui est arrêté après détection d'un enregistreur nécessitant un traitement rapide, comme exposé ci-dessus. Il est clair, en regardant la figure 3 que le compteur de recherche 20 doit avoir terminé sa recherche dans un temps inférieur à celui de m—1 intervalles de temps, afin qu'il soit effectivement arrêté lorsque le signal de transfert ST est appliqué au deuxième multiplexeur. On se souviendra en effet que la trame TR de la figure 3 est indentique à la trame en sortie du deuxième multiplexeur (25), donc en sortie du premier registre (28), mais retardée dans le temps d'un intervalle de temps par rapport à elle, puisque la trame TR représentée figure 3 est celle obtenue en sortie du deuxième registre 30.

## Revendications

1. Dispositif d'adressage d'un ensemble d'enregistreurs d'un central de commutation, comportant un compteur d'enregistreurs (26) commandé par un signal d'avance (HL) pour adresser dans une trame répétitive un nombre N d'enregistreurs, caractérisé par le fait qu'il comporte un premier (28), un deuxieme (30) et un troisième (32) registres en série, le premier registre adressant l'ensemble d'enregistreurs (4) pour lecture d'un enregistreur, le troisième registre adressant l'ensemble d'enregistreurs pour écriture dans un enregistreur, chaque adresse étant présente en sortie du compteur d'enregistreurs et en sortie du premier registre pendant un intervalle de temps de la trame défini par le signal d'avance, chaque adresse étant transférée ensuite dans le deuxième registre où elle est présente pendant un intervalle de temps puis dans le troisième registre où elle est également présente pendant un intervalle de temps, une mémoire (33) ayant N mots d'au moins un élément binaire, une horloge (22) délivrant un train de N impulsions, un compteur de recherche (20), un premier multiplexeur (24) avant une première entrée reliée au compteur de recherche, une deuxième entrée reliée à la sortie du deuxième registre (30) et une sortie reliée à un circuit d'adressage (34) de la mémoire, un deuxième multiplexeur (25) ayant une première entrée reliée au compteur de recherche et une deuxième entrée reliée au compteur d'enregistreurs, que la deuxième entrée du premier multiplexeur (24) est validée par un signal d'écriture (CRW) appliqué au premier multiplexeur, que la mémoire (33) reçoit en entrée un élément binaire particulier d'une instruction en cours de traitement dans un enregistreur, le signal d'écriture permettant d'écrire dans la mémoire la valeur dudit élément binaire particulier lorsque l'adresse de l'enregistreur en traitement est présente dans le deuxième registre (30), ledit élément binaire particulier ayant la valeur 1 lorsque l'instruction nécessite un traitement rapide et la valeur 0 dans le cas contraire, et que le signal d'avance (HL) est bloqué quand un signal de transfert (ST) de durée égale à un intervalle de temps est appliqué au deuxième multiplexeur (25) après m intervalles de temps pour valider sa première entrée et transmettre une adresse affichée par le compteur de recherche qui est bloqué dès qu'un élément binaire de valeur 1 est lu dans la mémoire, la recherche d'un élément binaire de valeur 1 étant effectuée dans un temps inférieur à m—1 intervalles de temps, ledit signal de transfert introduisant dans la trame, après chaque m intervalles de temps, un intervalle de temps supplémentaire affecté à un enregistreur dont l'instruction nécessite un traitement rapide.

2. Dispositif d'adressage d'un ensemble d'enregistreurs selon la revendication 1, caractérisé par le fait que l'horloge (22) démarre, sous commande d'un signal d'initialisation (INIT), un intervalle de temps après la fin du signal de transfert (ST), qu'elle est bloquée temporairement par chaque impulsion du signal d'écriture (CRW), et que le train de N impulsions est délivré dans un temps inférieur à m—1 intervalles de temps.

3. Dispositif d'adressage d'un ensemble d'enregistreurs selon la revendication 1, caractérisé par le fait qu'un signal de remise à zéro (RZ) est appliqué au compteur de recherche (20) quand, après lecture des N mots de la mémoire (33), aucun de ces mots ne comporte d'élément binaire de valeur 1.

4. Dispositif d'adressage d'un ensemble d'enregistreurs selon la revendication 1, caractérisé par le fait que chaque mot de la mémoire comporte deux éléments binaires, affectés chacun à une instruction lorsqu'un enregistreur traite deux instructions dans un intervalle de temps.

5. Dispositif d'adressage d'un ensemble d'enregistreurs selon la revendication 4, caractérisé par le fait que chaque sortie de la mémoire correspondant à un élément binaire d'un mot est reliée à travers un inverseur (42, 43) à une bascule (40, 41), chaque bascule étant commandée par un signal d'échantillonnage (ECH1, ECH2) lorsque le compteur de recherche (20) étant bloqué l'adresse qu'il délivre et qui est prise en compte par le signal de transfert (ST), est présente dans le deuxième registre (30) pour traitement de l'enregistreur correspondant, un premier signal d'échantillonnage (ECH1) étant appliqué à une première bascule (40) au début du temps de traitement, un deuxième signal d'échantillonnage (ECH2) étant appliqué à une deuxième bascule (41) au milieu du temps de traitement, le signal de sortie de chaque bascule étant appliqué à un bloc de calcul (3) effectuant le traitement pour inhiber son fonctionnement lorsque la valeur de l'élément binaire correspondant délivré en sortie de la mémoire (33) a la valeur 0.

**Patentansprüche**

1. Adressiervorrichtung einer Gruppe von Registrierern einer Vermittlungszentrale, die einen Registriererzähler (26) aufweist, der von einem Vorrücksignal (HL) gesteuert wird, um in einem Wiederholrahmen eine Anzahl N von Registrierern zu adressieren, dadurch gekennzeichnet, daß sie ein erstes (28), eine zweites (30) und ein drittes Register (32) in Serie aufweist, wobei das erste Register die Gesamtheit der Registrierer (4) zum Lesen eines Registrierers adressiert, das dritte Register die Gesamtheit der Registrierer zum Schreiben in einen Registrierer adressiert, wobei jede Adresse am Ausgang des Registriererzählers und am Ausgang des ersten Registers während eines Zeitintervalls des Wiederholrahmens, das vom Vorrücksignal definiert wird, vorhanden ist, worauf jede Adresse in das zweite Register übertragen wird, wo sie während eines Zeitintervalls vorhanden ist, und dann in das dritte Register, wo sie ebenfalls während eines Zeitintervalls vorhanden ist, daß die Vorrichtung weiter einen Speicher (33) mit N Wörtern mindestens eines Binärelements, einen Taktgeber (22), der einen Impulszug von N Impulsen liefert, einen Suchzähler (20), einen ersten Multiplexer (24), dessen erster Eingang mit dem Suchzähler verbunden ist, dessen zweiter Eingang mit dem Ausgang des zweiten Registers (30) und dessen Ausgang mit einem Adressierschaltkreis (34) für den Speicher verbunden ist, und einen zweiten Multiplexer (25) aufweist, dessen erster Eingang mit dem Suchzähler und dessen zweiter Eingang mit dem Registriererzähler verbunden ist, daß der zweite Eingang des ersten Multiplexers (24) von einem Schreibsignal (CRW) aktiviert wird, das an den ersten Multiplexer angelegt wird, daß der Speicher (33) am Eingang ein besonderes Binärelement eines gerade in einem Registrierer verarbeiteten Befehls erhält, wobei das Schreibsignal es ermöglicht, in den Speicher den Wert des bestimmten Binärelements einzuschreiben, wenn die Adresse des gerade bearbeiteten Registrierers im zweiten Register (30) vorhanden ist, wobei das bestimmte Binärelement den Wert 1 hat, wenn der Befehl eine schnelle Bearbeitung notwendig macht, und den Wert 0 im gegenteiligen Fall, und daß das Vorrücksignal (HL) blockiert ist, wenn ein Übertragungssignal (ST) einer Dauer gleich einem Zeitintervall an den zweiten Multiplexer (25) nach m Zeitintervallen angelegt wird, um seinen ersten Eingang zu aktivieren und eine vom Suchzähler angezeigte Adresse zu übertragen, der blockiert wird, sobald ein Binärelement des Werts 1 im Speicher gelesen wird, wobei die Suche nach einem Binärelement des Werts 1 in einer Zeit durchgeführt wird, die kürzer ist als m—1 Zeitintervalle, wobei das Übertragungssignal in den Rahmen nach je m Zeitintervallen ein zusätzliches Zeitintervall einführt, das einem Registrierer zugeordnet ist, dessen Befehl eine schnelle Bearbeitung erfordert.

2. Adressiervorrichtung für eine Gruppe von Registrierern nach Anspruch 1, dadurch gekennzeichnet, daß der Taktgeber (22) unter dem Befehl eines Startsignals (INIT) ein Zeitintervall nach dem Ende des Übertragungssignals (ST) zu laufen beginnt, daß er kurzzeitig von jedem Impuls des Schreibsignals (CRW) blockiert wird und daß der Impulszug von N Impulsen in einer Zeit geliefert wird, die kürzer ist als m—1 Zeitintervalle.

3. Adressiervorrichtung für eine Gruppe von Registrierern nach Anspruch 1, dadurch gekennzeichnet, daß ein Nullrückstellungssignal (RZ) an den Suchzähler (20) angelegt wird, wenn nach dem Lesen der N Worte des Speichers (33) keines dieser Worte ein Binärelement des Werts 1 enthält.

4. Adressiervorrichtung für eine Gruppe von Registrierern nach Anspruch 1, dadurch gekennzeichnet, daß jedes Wort des Speichers zwei Binärelemente aufweist, die je zu einem Befehl gehören, wenn ein Registrierer zwei Befehle in einem Zeitintervall bearbeitet.

5. Adressiervorrichtung für eine Gruppe von Registrierern nach Anspruch 4, dadurch gekennzeichnet, daß jeder Ausgang des Speichers, der zu einem Binärelement eines Wortes gehört, über einen Umkehrer (42, 43) mit einer Kippstufe (40, 41) verbunden ist, wobei jede Kipp-

stufe von einem Tastprobensignal (ECH1, ECH2) gesteuert wird, wenn die Adresse, die der Suchzähler (20), solange er blockiert ist, liefert und die vom Übertragungssignal (ST) berücksichtigt wird, im zweiten Register (30) zur Bearbeitung des entsprechenden Registrierers vorhanden ist, wobei ein erstes Tastprobensignal (ECH1) am Anfang der Bearbeitungszeit an eine erste Kippstufe (40) angelegt wird und ein zweites Tastprobensignal (ECH2) an eine zweite Kippstufe in der Mitte der Bearbeitungszeit angelegt wird, während das Ausgangssignal jeder Kippstufe an einen Rechenblock (3) angelegt wird, der die Bearbeitung durchführt, um seinen Betrieb zu verhindern, wenn der Wert des am Ausgang des Speichers (33) gelieferten entsprechenden Binärelements dem Wert 0 entspricht.

**Claims**

1. A device for addressing a set of storage zones of a switching exchange, comprising a storage zone counter (26) controlled by an advance signal (HL) to address a plurality of N storage zones in a repetitive frame, characterized in that it comprises a first (28), a second (30) and a third register (32) connected in series, the first register addressing the set of storage zones (4) for reading out of a storage zone, the third register addressing the set of storage zones for writing into a zone, each address being present at the output of the storage zone counter and at the output of the first register during a frame time interval defined by the advance signal, each address being then transferred to the second register where it is present during a time interval and then to the third register where it is also present during a time interval, a memory (33) having N words of at least one binary element, a clock (22) delivering a train of N pulses, a search counter (20), a first multiplexer (24) having a first input connected to the search counter, a second input connected to the output of the second register (30) and an output connected to a memory addressing circuit (34), a second multiplexer (25) having a first input connected to the search counter and a second input connected to the storage zone counter, that the second input of the first multiplexer (24) is enabled by a write signal (CRW) applied to the first multiplexer, that the memory (33) receives at its input a particular binary element of an instruction which is being processed in a storage zone, the write signal permitting to write the value of said particular binary element into the memory when the address of the storage zone which is being processed is present in the second register (30), said particular binary element having the value 1 if the instruction requires rapid processing, and the value 0, if this is not so, and that the advance signal (HL) is blocked when a transfer signal (ST) of a duration equal to a time interval is applied to the second multiplexer (25) after m time intervals to enable its first input and to transmit an address presented by the search counter which is blocked as soon as a binary element of the value 1 is read from the memory. the search for a binary element of the value 1 being effected during a time less than m—1 time intervals, said transfer signal introducing into the frame, after each m time intervals, a supplementary time interval assigned to a storage zone whose instruction requires rapid processing.

2. A device for addressing a set of storage zones according to claim 1, characterized in that the clock (22) starts under control of an initialization signal (INIT) one time interval after the end of the transfer signal (ST), that it is blocked temporarily by each pulse of the write signal (CRW) and that the train of N pulses is delivered in a time less than m—1 time intervals.

3. A device for addressing a set of storage zones according to claim 1, characterized in that a reset to zero signal (RZ) is applied to the search counter (20) when, the N words of the memory (33) having been read, none of these words comprises a binary element of the value 1.

4. A device for addressing a set of storage zones according to claim 1, characterized in that each word of the memory comprises two binary elements, each affected to an instruction when a storage zone processes two instructions in a time interval.

5. A device for addressing a set of storage zones according to claim 4, characterized in that each output of the memory corresponding to a binary element of a word is connected via an inverter (42, 43) to a bistable (40, 41), each bistable being controlled by a sampling signal (ECH1, ECH2) when, the search counter (20) being blocked, the address which it delivers and which is taken into account by the transfer signal (ST), is present in the second register (30) for processing of the corresponding storage zone, a first sampling signal (ECH1) being applied to a first bistable (40) at the beginning of the processing time, a second sampling signal (ECH2) being applied to a second bistable (41) in the middle of the processing time, the output signal of each bistable being applied to a computing block (3) carrying out the processing for inhibiting its operation when the value of the corresponding binary element delivered at the output of the memory (33) has the value 0.

FIG.1

DISPOSITIF
D'ADRESSAGE 1

15
16
11

14

ENSEMBLE
D'ENREGISTREURS 4

BLOC
DE
CALCUL 3

8

MEMOIRE
TAMPON 5

MEMOIRE
TAMPOM 6

MEMOIRE
D'INSTRUCTIONS 9

10

CIRCUIT
D'ADRESSAGE
SPATIAL 12

13

CIRCUIT DE
LECTURE 7

0 052 863

FIG.2

FIG.3